Europäisches Patentamt

European Patent Office

Office européen des brevets

(19)

(11) Veröffentlichungsnummer: **0 090 949**
**A1**

# (12) EUROPÄISCHE PATENTANMELDUNG

(21) Anmeldenummer: 83102055.7

(22) Anmeldetag: 03.03.83

(51) Int. Cl.³: **B 60 P 1/64**

(30) Priorität: 03.04.82 DE 3212583

(43) Veröffentlichungstag der Anmeldung:
12.10.83 Patentblatt 83/41

(84) Benannte Vertragsstaaten:
DE FR GB

(71) Anmelder: Braunschweigische Maschinenbauanstalt AG
Am Alten Bahnhof 5
D-3300 Braunschweig(DE)

(72) Erfinder: Katzenschwanz, Norbert, Dr.
Ostpreussendamm 50
D-3300 Braunschweig(DE)

(74) Vertreter: Döring, Rudolf, Dr.-Ing.
Patentanwälte Dr.-Ing. R. Döring Dipl.-Phys. Dr. J. Fricke
Jasperallee 1a
D-3300 Braunschweig(DE)

(54) Transportfahrzeug für die Containerabfertigung, insbesondere von Flugzeugen.

(57) Das Transportfahrzeug (1) für die Containerabfertigung von Flugzeugen oder Schiffen ist mit einer als Rollenboden ausgebildeten Ladefläche zum Durchladen eines Containers in Längsrichtung ausgerüstet. Zur Übernahme oder Übergabe des Containers (16a) ist die Ladefläche mit höhenverstellbaren Transporträdern versehen. Seitlich neben der Ladefläche befinden sich eine Fahrerkabine (3), eine Antriebseinrichtung (4) mit einem Motor-Hydraulik-Aggregat sowie ein Drehkran (2) zur Übernahme eines Containers (16a) von einem LKW oder Eisenbahnwaggon bzw. umgekehrt.

EP 0 090 949 A1

Croydon Printing Company Ltd

- 1 -

Braunschweigische Maschinenbauanstalt AG
Am Alten Bahnhof 5, 3300 Braunschweig

Transportfahrzeug für die Containerabfertigung,
insbesondere von Flugzeugen

Die Erfindung betrifft ein Transportfahrzeug für die Containerabfertigung, insbesondere von Flugzeugen, mit einer Ladefläche, welche zur Aufnahme wenigstens eines Containers mit einem Rollenboden und zur Übernahme und/oder Übergabe des Containers mit Transporträdern ausgerüstet ist, sowie mit einer seitlich angeordneten Fahrerkabine und einer in Fahrtrichtung hinter der Fahrerkabine angeordneten Antriebseinrichtung.

Die bekannten Transportfahrzeuge dienen zum rationellen Umschlag von Paletten und Containern, insbesondere zwischen am Flugzeug positionierten Hubbühnen und Dollies unterschiedlicher Bauart. Da die Fahrerkabine und die Antriebseinrichtung seitlich angeordnet sind, kann die Last sowohl an der Vorder- als auch an der Hinterkante der Ladefläche übernommen werden. An der Vorderkante erfolgt die Lastübernahme vorzugsweise durch hydraulisch über Ketten angetriebene Transporträder in Ladefingern, welche an unterschiedliche Transport-, Hebe- und Lagereinrichtungen angepaßt werden können. Auf der als Rollenboden ausgebildeten Ladefläche kann die Last mittels weiterer angetriebener Transporträder in Längsrichtung bewegt werden.

- 2 -

Die bekannten Transportfahrzeuge können auch einen von einem LKW an den Flughafen angelieferten Container übernehmen. Da die für den Flughafenvorfeldbetrieb zugelassenen Transportfahrzeuge als Tieflader ausgebildet sind, wird für die Übernahme des Containers vom LKW eine Hubeinrichtung benötigt. Nach der Übernahme des Containers wird dieser durch das Transportfahrzeug zur Hubbühne befördert, welche den Container vom Transportfahrzeug übernimmt und in den Frachtraum des Flugzeuges befördert. In umgekehrter Reihenfolge dient das Transportfahrzeug zur Beförderung des Containers von der Hubbühne zum LKW. Sowohl bei der Übernahme des Containers vom LKW auf das Transportfahrzeug als auch bei der Übergabe des Containers vom Transportfahrzeug auf den LKW sind eine Hubeinrichtung, beispielsweise ein Gabelstapler, und entsprechendes Bedienungspersonal erforderlich.

Es ist Aufgabe der Erfindung, ein Transportfahrzeug der einleitend beschriebenen Art so weiterzubilden, daß die Containerabfertigung zwischen einem LKW oder Eisenbahnwaggon und einem Flugzeug mit geringem Geräte- und Personalaufwand möglich ist.

Die Lösung der Aufgabe kennzeichnet sich erfindungsgemäß durch einen Drehkran auf der Seite der Fahrerkabine und der Antriebseinrichtung. Der Ausleger des Drehkranes ist mit einem Ladegeschirr ausgerüstet, welches in das Dachgerüst des Containers greift, so daß dieser vom LKW oder vom Eisenbahnwaggon ohne zusätzliche Hilfsmittel unmittelbar auf die Ladefläche des Transporters gesetzt werden kann. Ebenso ist der Drehkran auf dem Transportfahrzeug zur Übergabe des Containers auf einen LKW bzw. Eisenbahnwaggon geeignet. Da die Fahrerkabine, die Antriebseinrichtung und der Drehkran auf derselben Seite des Transport-

- 3 -

fahrzeuges angeordnet sind, kann die Übernahme bzw. Übergabe des Containers auf der gegenüberliegenden Seite des Transportfahrzeuges bequem vorgenommen werden. Nach der Übernahme des Containers und dessen Sicherung auf dem Transportfahrzeug kann der Drehkran zur Seite geschwenkt und in Fahrtrichtung festgelegt werden. Die Übergabe des Containers auf die Hubbühne am Flugzeug kann ohne Hilfe des Drehkranes auf die bekannte Weise durchgeführt werden.

Zweckmäßigerweise ist der Drehkran in Fahrtrichtung hinter der Antriebseinrichtung angeordnet. Hierbei befindet sich die Antriebseinrichtung, beispielsweise ein Motor-Hydraulik-Aggregat, zwischen der Fahrerkabine und dem Drehkran. Auf diese Weise wird der Arbeitsbereich des Drehkranes im hinteren Bereich des Transportfahrzeuges nicht durch die Antriebseinrichtung beeinträchtigt.

Eine einfache und vielseitige Ausführungsform ergibt sich, wenn der Drehkran mit zwei in Reihe miteinander verbundenen und um horizontale Achsen schwenkbaren Auslegerarmen ausgerüstet ist, welche jeweils mittels einer Kolbenzylinderanordnung vertikal verschwenkbar sind. Der auf dem Transportfahrzeug gelagerte drehbare Teil des Drehkranes ist an seinem oberen Ende mit einem Auslegerarm verbunden, während der zweite Auslegerarm mit der Last verbindbar ist. Durch die Verwendung von zwei in Reihe miteinander verbundenen Auslegerarmen ist es möglich, unmittelbar neben dem Drehkran einen Container auf die Ladefläche abzusetzen oder von dieser abzuheben. Außerdem können die Auslegerarme derart verschwenkt werden, daß sie im Ruhezustand nicht über die hintere Begrenzung des Transportfahrzeuges hinausragen und auch eine zulässige Höhe des Transportfahrzeuges nicht überschreiten.

Eine weitere Vereinfachung der Containerabfertigung ergibt

- 4 -

sich, wenn die Ladefläche als Hubplattform ausgebildet und über eine Hubschere höhenverstellbar ist. Ein derartiges Transportfahrzeug erspart nicht nur den Gabelstapler für die Übernahme bzw. Übergabe des Containers vom bzw. zum LKW oder Eisenbahnwaggon, sondern darüber hinaus die zum Be- und Entladen erforderliche Hubbühne am Flugzeug.

Die Erfindung wird anhand eines in der Zeichnung schematisch dargestellten Ausführungsbeispieles nachstehend näher erläutert.

Es zeigen:

Fig. 1 die Heckansicht eines mit einem Drehkran ausgerüsteten Transportfahrzeuges und eines Containers auf einem LKW,

Fig. 2 die Seitenansicht des Transportfahrzeuges gemäß Fig. 1 und

Fig. 3 eine Draufsicht auf das Transportfahrzeug gemäß Fig. 1 und 2.

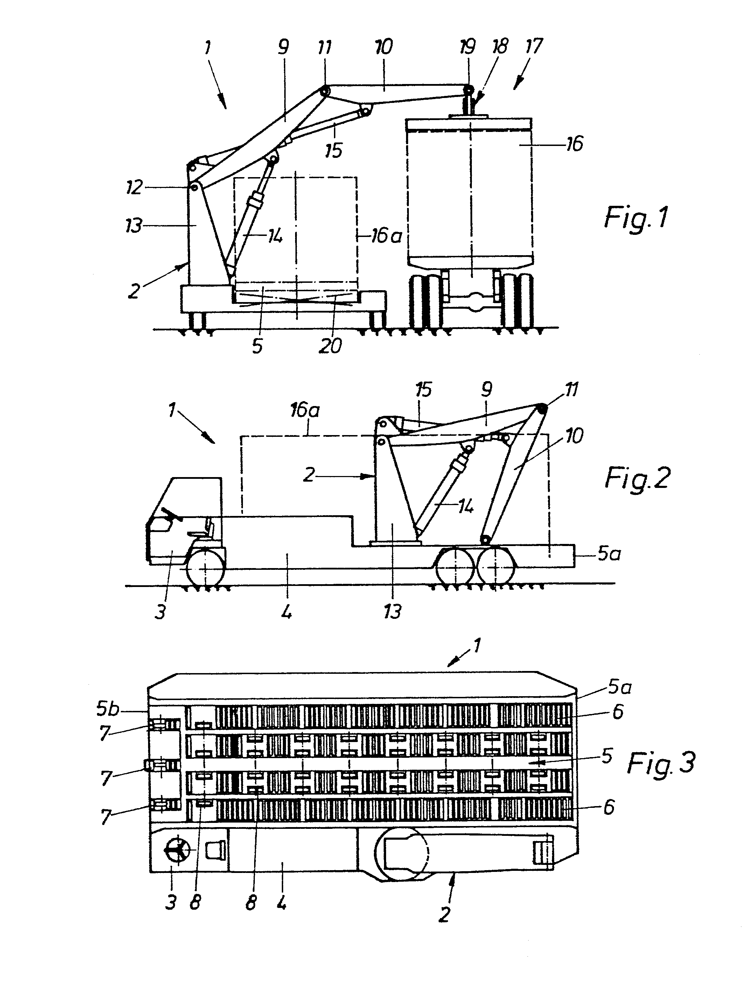

Das in den Figuren dargestellte Transportfahrzeug 1 für die Containerabfertigung von Flugzeugen ist mit einem Drehkran 2 ausgerüstet, welcher in Fahrtrichtung des Transportfahrzeuges 1 auf der linken Seite angeordnet ist. Außerdem sind auf der linken Seite des Transportfahrzeuges 1 eine Fahrerkabine 3 sowie eine aus einem Motor-Hydraulik-Aggregat bestehende Antriebseinrichtung 4 angeordnet, wie aus den Fig. 2 und 3 hervorgeht.

Die Ladefläche 5 des Transporters 1 ist mit einem Rollenboden 6 ausgerüstet, welcher das Durchladen einer auf dem Rollenboden 6 sich abstützenden Last von der Hinterkante 5a der Ladefläche 5 zur Vorderkante 5b bzw. umgekehrt ermöglicht. Im vorderen Bereich der Ladefläche 5 sind die in Fig. 3 dargestellten Ladefinger 7 vorgesehen, welche an unterschiedliche Transport-, Hebe- und Lagereinrichtungen angepaßt werden können. Die Last auf der Ladefläche 5 wird in Längsrichtung des Transportfahrzeuges 1 durch hydraulisch über Ketten angetriebene Transporträder 8 vorgenommen. Außerdem sind auf der Ladefläche 5 nicht dargestellte Arretierungseinrichtungen zur Sicherung der Last während der Fahrt des Transportfahrzeuges 1 vorgesehen.

Der seitlich auf dem Transportfahrzeug 1 angebrachte Drehkran 2 ist mit zwei in Reihe über eine Schwenkachse 11 miteinander verbundenen Auslegerarmen 9 und 10 ausgerüstet. Der Auslegerarm 9 ist über eine weitere horizontal gelagerte Schwenkachse 12 mit einer Kransäule 13 verbunden, welche auf dem Transportfahrzeug 1 um eine vertikale Achse drehbar gelagert ist. Aus den Fig. 1 und 2 ist weiterhin ersichtlich, daß der Auslegerarm 9 mittels einer Kolbenzylinderanordnung 14 und der Auslegerarm 10 mittels einer Kolbenzylinderanordnung 15 verschwenkbar ist.

Fig. 1 gibt zu erkennen, daß ein Container 16 von einem LKW 17 mit Hilfe des Drehkranes 2 auf die Ladefläche 5 des Transportfahrzeuges 1 übernommen werden kann. Das Ladegeschirr 18 des Drehkranes 2 steht über eine im Auslegerarm 10 gehaltene Schwenkachse 19 mit dem Dachgerüst des Containers 16 während des Hebevorganges in Verbindung. Als Hubeinrichtung des Drehkranes 2 dienen die Kolbenzylinderanordnungen 14 und 15, so daß ein Seilzug nicht erforderlich ist. Der auf die Ladefläche 5 des Transportfahrzeuges 1 abgesetzte Container ist in Fig. 1 und 2 gestrichelt dargestellt und mit 16a bezeichnet.

- 6 -

Während der Fahrt ist der Drehkran 2 mit seinen Auslegern 9 und 10 in Fahrtrichtung des Transportfahrzeuges 1 gedreht. Die Ausleger 9 und 10 sind hierbei so geschwenkt, daß sie nicht über die Hinterkante 5a der Ladefläche 5 hinausragen und auch die zulässige Gesamthöhe des Transportfahrzeuges 1 nicht überschreiten. Diese Ruhestellung des Drehkranes 2 ist in Fig. 2 und 3 dargestellt.

In Fig. 1 ist durch strichpunktierte Linien angedeutet, daß die Ladefläche 5 des Transportfahrzeuges 1 mit einer Hubschere 20 ausgerüstet ist. Eine derartige als Hubplattform ausgebildete Ladefläche 5 ermöglicht das Anheben des Containers 16 bzw. 16a bis zum Frachtdeck des Flugzeuges. Bei Verwendung eines derartigen Fahrzeuges ist eine besondere Hubbühne am Ladetor des Flugzeuges nicht mehr erforderlich. Unabhängig von der Ausbildung der Ladefläche ist es durch den Drehkran 2 möglich, auf einen Gabelstapler zur Übergabe des Containers 16 auf die Ladefläche 5 bzw. umgekehrt zu verzichten.

Das erfindungsgemäße Transportfahrzeug ist ebenso für die Containerabfertigung von Flugzeugen wie von Schiffen geeignet. Folglich kann das Transportfahrzeug auch für den unmittelbaren Umschlag zwischen Flugzeugen und Schiffen eingesetzt werden.

- 7 -

Ansprüche

1. Transportfahrzeug für die Containerabfertigung, insbesondere von Flugzeugen, mit einer Ladefläche, welche zur Aufnahme wenigstens eines Containers mit einem Rollenboden und zur Übernahme und/oder Übergabe des Containers mit Transporträdern ausgerüstet ist, sowie mit einer seitlich angeordneten Fahrerkabine und einer in Fahrtrichtung hinter der Fahrerkabine angeordneten Antriebseinrichtung, g e k e n n z e i c h n e t   d u r c h   einen Drehkran (2) auf der Seite der Fahrerkabine (3) und der Antriebseinrichtung (4).

2. Transportfahrzeug nach Anspruch 1, d a d u r c h g e k e n n z e i c h n e t,  daß der Drehkran (2) in Fahrtrichtung hinter der Antriebseinrichtung (4) angeordnet ist.

3. Transportfahrzeug nach Anspruch 1 oder 2, d a d u r c h   g e k e n n z e i c h n e t,  daß der Drehkran (2) mit zwei in Reihe miteinander verbundenen und um horizontale Achsen (11,12) schwenkbaren Auslegerarmen (9,10) ausgerüstet ist, welche jeweils mittels einer Kolbenzylinderanordnung (14,15) vertikal verschwenkbar sind.

4. Transportfahrzeug nach einem der vorhergehenden Ansprüche, d a d u r c h   g e k e n n z e i c h n e t,  daß die Ladefläche (5) als Hubplattform ausgebildet und über eine Hubschere (20) höhenverstellbar ist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 924 109 (TREPEL) <br> * Seite 7, Zeilen 11-20; Abbildungen 1-3 * <br><br> --- | 1 | B 60 P 1/64 |
| Y | FR-A-2 092 315 (CRUTCHER) <br> * Seite 3, Zeilen 9,10; Abbildungen 1,6 * | 1 | |
| A | * Seite 3, Zeilen 9,10; Abbildungen 2,7 * <br><br> --- | 3 | |
| A | US-A-3 944 096 (CARDER) <br> * Spalte 2, Zeilen 43-52; Abbildungen 1,2 * <br><br> ----- | 4 | |

| RECHERCHIERTE SACHGEBIETE (Int. Cl. 3) |
|---|
| B 60 P 1/00 <br> B 60 P 3/00 |

Der vorliegende Recherchenbericht wurde für alle Patentansprüche erstellt.

| Recherchenort <br> DEN HAAG | Abschlußdatum der Recherche <br> 11-07-1983 | Prüfer <br> OSBORNE J. |
|---|---|---|